# EUROPEAN PATENT APPLICATION

(11) **EP 4 621 441 A1**
(43) Date of publication of application: **24.09.2025**
(21) Application number: 23890625.9
(22) Date of filing: 03.11.2023
(51) Int. Cl.: G01S 17/06, G01S 17/04, G01S 17/86, G01S 17/89, G01S 7/495, G01S 7/48

(54) **VEHICLE POSITIONING METHOD AND APPARATUS, ELECTRONIC DEVICE, AND STORAGE MEDIUM**

(30) Priority: 15.11.2022 CN 202211424191
(71) Applicant: Shanghai Westwell Technology Co., Ltd., Shanghai 200050 (CN)
(72) Inventor: TAN, Limin, Shanghai 200050 (CN); ZHOU, Xiaokai, Shanghai 200050 (CN); LI, Ying, Shanghai 200050 (CN); MA, Peili, Shanghai 200050 (CN)
(74) Representative: Guardian IP Consulting I/S
(86) International application number: PCT/CN2023/129520
(87) International publication number: WO 2024/104189

(57) **Abstract**

The present invention provides a vehicle positioning method and apparatus, an electronic device, and a storage medium. The method comprises: acquiring positioning information of a vehicle; in a first container map, determining candidate containers within a set distance range of the vehicle according to the positioning information; comparing laser data acquired by a laser sensor of the vehicle with the candidate containers in the first container map so as to determine whether the candidate containers really exist; in response to the real existence of the candidate containers, storing the size information of the candidate containers into a second container map according to the laser data; and according to the laser data matching candidate containers to be processed, and the second container map, updating the positioning information of the vehicle, wherein the candidate containers to be processed are real candidate containers of which the number of point clouds of the matching laser data is greater than a second set threshold. According to the present invention, in a strongly dynamic environment, the consistency, robustness, and real-time performance of positioning precision are realized on the basis of containers.

## Description

### TECHNICAL FIELD

The present disclosure relates to the technical field of laser-based positioning for port vehicles, and in particular, to a vehicle positioning method and an apparatus, an electronic device and a storage medium.

### BACKGROUND

Nowadays, in vehicle positioning method based on laser data, if vehicle positioning and map construction are performed simultaneously, the cumulative errors from laser matching cannot be eliminated at non-closed-loop scenarios, leading to insufficient positioning accuracy in areas with indistinct features. Meanwhile, to meet real-time requirements, simultaneously performing vehicle positioning and map construction requires high computational capability of computing module, resulting in high costs and making large-scale deployment difficult.

To ensure positioning accuracy, consistency, and real-time performance, some vehicle positioning methods rely on high-precision maps combining high-precision positioning devices and manual annotations, achieving precise positioning through high-precision map matching. However, this method requires substantial time and labor costs for each high-precision map construction, therefore the method is clearly unsuitable for port environments with frequent and large-scale changes.

In port environments, the most prominent and numerous features are features of containers. The size and stacking layers of containers in each bay dynamically changes according to actual transportation processes.

Therefore, in such a highly dynamic environment, how to achieve consistent, robust, and real-time positioning accuracy based on containers has become a technical problem that urgently needs to be solved by those skilled in the art.

### SUMMARY

To solve the problems in the prior art, the purpose of the present disclosure is to provide a vehicle positioning method and an apparatus, an electronic device and a storage medium, to achieve consistent, robust, and real-time positioning accuracy based on containers in highly dynamic environments.

Embodiments of the present disclosure provide a vehicle positioning method including: acquiring positioning information of a vehicle; in a first container map, determining candidate containers within a preset distance range of the vehicle based on the positioning information; comparing laser data acquired by the vehicle's laser sensor with the candidate containers in the first container map to determine whether the candidate containers actually exist; in response to determining that the candidate containers actually exist, storing size information of the candidate containers based on the laser data into a second container map; updating the positioning information of the vehicle based on the laser data matched with to-be-processed candidate containers and the second container map, wherein the to-be-processed candidate containers are actually existing candidate containers of which the number of point clouds from matched laser data is greater than a second preset threshold.

Alternatively, the first container map is a container map including different arrangements of candidate containers generated based on determined bays, and an initial size of each candidate container in the second container map is 0.

Alternatively, the step of storing size information of the candidate containers based on the laser data into a second container map includes: comparing the size information of the candidate containers based on the laser data with the size information of the candidate containers in the second container map; when the size information of candidate containers based on the laser data is different from the size information of candidate containers in the second container map, updating the size information of the candidate containers based on the laser data into the second container map.

Alternatively, the step of updating the size information of the candidate containers based on the laser data into the second container map includes: distributing the size information of the candidate containers based on the laser data to associated vehicle terminals.

Alternatively, the size of the candidate containers in the second container map is recorded as 0 when the candidate containers do not actually exist.

Alternatively, the step of comparing laser data acquired by the vehicle's laser sensor with the candidate containers in the first container map to determine whether the candidate containers actually exist is performed when the number of the candidate containers exceeds a first preset threshold.

Alternatively, when the number of candidate containers does not exceed the first preset threshold, acquiring positioning information of the vehicle at a next moment to execute the vehicle positioning method.

Alternatively, the step of updating the positioning information of the vehicle based on the laser data matched with to-be-processed candidate containers and the second container map is performed when the number of the to-be-processed candidate containers exceeds a third preset threshold.

Alternatively, when the number of the to-be-processed candidate containers does not exceed the third preset threshold, acquiring positioning information of the vehicle at a next moment to execute the vehicle positioning method.

Embodiments of the present disclosure further provide a vehicle positioning apparatus applied to the vehicle positioning method, the apparatus includes: a stitching module configured to acquire positioning information of a vehicle; a first determination module configured to determine candidate containers within a preset distance range of the vehicle in the first container map based on the positioning information; a second determination module configured to compare laser data acquired by the vehicle's laser sensor with the candidate containers in the first container map to determine whether the candidate containers actually exist; a size update module configured to store size information of the candidate containers based on the laser data into the second container map in response to determining that the candidate containers actually exist; a positioning update module configured to update the positioning information of the vehicle based on the laser data matched with to-be-processed candidate containers and the second container map, wherein the to-be-processed candidate containers are actually existing candidate containers of which the number of point clouds in matched laser data is greater than a second preset threshold.

Embodiments of the present disclosure further provide an electronic device, including: a processor; a memory configured to store a computer program, wherein the vehicle positioning method is performed when the computer program is executed by the processor.

Embodiments of the present disclosure further provide a computer storage medium configured to store a computer program, wherein the vehicle positioning method is performed when the computer program is executed by a processor.

Compared with the prior art, the present disclosure has the following technical effects.

The preliminary position of the vehicle is determined based on the positioning information of the vehicle. Then, the first container map generated based on different arrangements of candidate containers in the determined bay is used to determine whether multiple candidate containers (possible containers) exist around the vehicle. If multiple candidate containers exist, laser data is used to determine whether the candidate containers actually exist. If the candidate containers do exist, the second container map is updated. The vehicle's positioning information is then updated based on the second container map and the candidate containers with dense laser point clouds to obtain precise vehicle positioning. This method reduces the cost of the computing module and avoids cumulative errors caused by non-closed-loop matching of laser data. Meanwhile, the real-time performance, consistency, and robustness requirements for vehicle positioning can be met without generating high-precision maps.

### BRIEF DESCRIPTION OF THE DRAWINGS

Other features, objectives and advantages of the present disclosure will become more apparent from reading the detailed description of non-limiting embodiments made with reference to the following accompanying drawings.
FIG. 1 is a flowchart of a vehicle positioning method according to an embodiment of the present disclosure;
FIG. 2 is a schematic diagram illustrating determination of candidate containers within a preset distance range of the vehicle in a first container map based on the positioning information, according to an embodiment of the present disclosure;
FIG. 3 is a schematic diagram illustrating the comparison of laser data with candidate containers in the first container map to determine whether the candidate container actually exists, according to an embodiment of the present disclosure;
FIG. 4 is a schematic diagram of a second container map for candidate containers according to an embodiment of the present disclosure;
FIG. 5 is a schematic diagram of an updated second container map according to an embodiment of the present disclosure;
FIG. 6 is a flowchart illustrating a vehicle positioning method according to a specific embodiment of the present disclosure;
FIG. 7 is a module diagram of a vehicle positioning apparatus according to an embodiment of the present disclosure;
FIG. 8 is a schematic diagram illustrating a computer-readable storage medium according to an exemplary embodiment of the present disclosure;
FIG. 9 is a schematic diagram illustrating an electronic device according to an exemplary embodiment of the present disclosure.

### DETAILED DESCRIPTION

Embodiments will now be described more fully with reference to the accompanying drawings. However, the example embodiments can be embodied in various forms and should not be construed as limited to the examples set forth herein; rather, these embodiments are provided so that this disclosure will be thorough and complete, and will fully convey the concept of the example embodiments to those skilled in the art. The described features, structures, or characteristics may be combined in any suitable manner in one or more embodiments.

Additionally, the drawings are only schematic illustrations of the present disclosure and are not necessarily drawn to scale. Same reference numbers in the drawings represent the same or similar parts, and thus repeated description will be omitted. Some of the block diagrams shown in the drawings are functional entities and do not necessarily correspond to physically or logically independent entities. These functional entities may be implemented in software, or in one or more hardware modules or integrated circuits, or in different networks and/or processor devices and/or microcontroller devices.

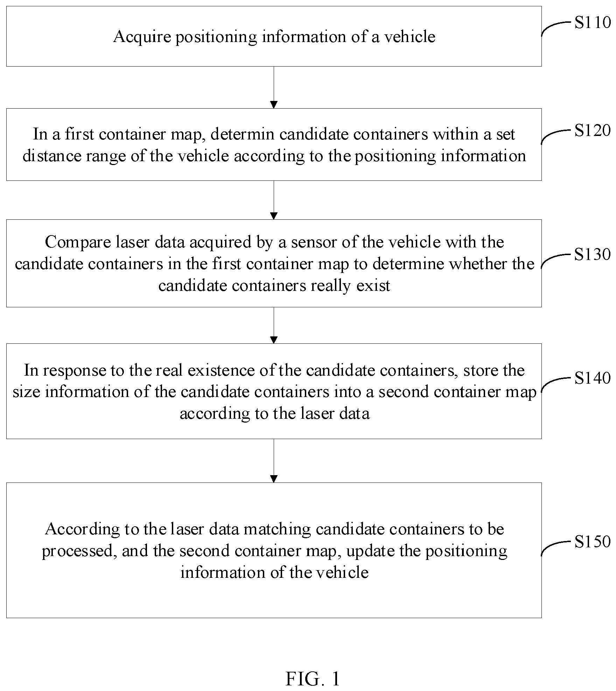

To solve the problem of the prior art, the present disclosure provides a vehicle positioning method. FIG. 1 is a flowchart of the vehicle positioning method according to an embodiment of the present disclosure. As shown in FIG. 1, the vehicle positioning method includes the following steps:
S110: acquiring positioning information of a vehicle;
S120: in a first container map, determining candidate containers within a preset distance range of the vehicle based on the positioning information;
S130: comparing laser data acquired by the vehicle's laser sensor with the candidate containers in the first container map to determine whether the candidate containers actually exist;
S140: in response to determining that the candidate containers actually exist, storing size information of the candidate containers based on the laser data into a second container map;
S150: updating the positioning information of the vehicle based on the laser data matched with to-be-processed candidate containers and the second container map, wherein the to-be-processed candidate containers are actually existing candidate containers of which the number of point clouds in matched laser data is greater than a second preset threshold.

In the vehicle positioning method provided by the present disclosure, the preliminary position of the vehicle is determined based on the positioning information of the vehicle. The first container map generated based on different arrangements of candidate containers in determined bays is used to determine whether multiple candidate containers (possible containers) exist around the vehicle. If multiple candidate containers exist, laser data is used to determine whether the candidate containers actually exist. If the candidate containers actually exist, the second container map is updated, and the positioning information of the vehicle is updated based on the second container map and to-be-processed candidate containers with more laser point clouds, thereby achieving precise positioning of the vehicle. The method reduces computing module costs, and avoids cumulative errors from non-closed-loop laser data matching. Meanwhile, the real-time performance, consistency, and robustness requirements for vehicle positioning can be met without generating high-precision maps.

Specifically, the positioning information in step S110 is initial positioning information, such as GPS positioning information or Beidou positioning information etc., but the present disclosure is not limited thereto. Other methods of acquiring positioning information, such as determining distances between the vehicle and multiple reference points based on communication speed and communication time to further determine initial positioning information of the vehicle, also fall within the protection scope of the disclosure. The positioning information in step S110 is used to determine the vehicle's approximate location on the map.

Specifically, the first container map is a candidate map including different arrangements of candidate containers generated based on determined bays. In practical port scenarios, bay positions for defining container placements are pre-planned, therefore the coordinates of the bays in the map coordinate system are already known. The first container map is generated based on simulating random stacking of containers (size and layers) in bays to represent possible placement scenarios of the size and layers of the containers. In some other embodiments, containers in each bay of the first container map may be assumed to be stacked to the maximum layers.

In some embodiments, in step S120, the candidate containers within the preset distance range of the vehicle are those observable by the vehicle's laser sensor. The preset distance range may be set to any value between 30-100 meters, but the present disclosure is not limited thereto. In other words, if the vehicle's laser sensor cannot detect candidate containers within the preset distance range of the vehicle, subsequent operations may not be performed, thereby improving algorithm efficiency and reducing system load.

Specifically, step S130 may further include down-sampling laser data and converting the laser data to the map coordinate system to ensure that all data can be matched under the map coordinate system.

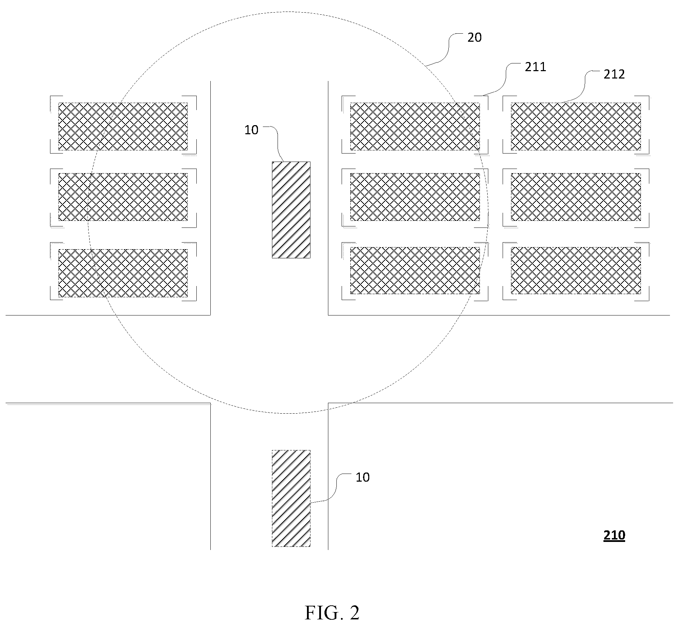

Specifically, step S130 may be performed when the number of the candidate containers is greater than a first preset threshold. The first preset threshold can be set as needed. For example, the first preset threshold can be set to an integer between 3 and 10, but the present disclosure is not limited thereto, and other alternative numbers also fall within the protection scope of the present disclosure. The following is described by taking the first set threshold being set to 5 as an example. FIG. 2 shows part of the first container map 210 and candidate containers 212 randomly placed in the first container map 210. When the number of candidate containers within the set distance range of the vehicle 10 is not greater than the first preset threshold, step S130 and subsequent steps may not be performed. When the vehicle 10 continues to travel until the number of (observable) candidate containers within the set distance range 20 of the vehicle is 6, as the number of the candidate containers is greater than the first preset threshold, step S130 and subsequent steps may be performed on the (observable) candidate containers within the set distance range 20 of the vehicle. FIG. 2 shows that each bay 211 in the partial first container map 210 is randomly placed with one layer of candidate container. The present disclosure is not limited thereto, and other placement methods with random layers also fall within the protection scope of the present disclosure.

The first preset threshold determines whether the vehicle is in an area having more containers, that is, a high-container-density area. If the vehicle is in a high-container-density area, the size of the containers and the positioning information of the vehicle can be updated. If the vehicle is in a low-container -density area, where features of containers contribute less to vehicle positioning, subsequent steps can be not performed, thereby reducing the amount of data to be processed, improving algorithm efficiency, and reducing system load. Furthermore, when the number of candidate containers is not greater than the first preset threshold, the positioning information of the vehicle at the next moment can be obtained to execute the vehicle positioning method. Since the positioning information of the vehicle at the next moment has changed during travel, the vehicle positioning method can be performed based on the positioning information of the vehicle at the next moment..

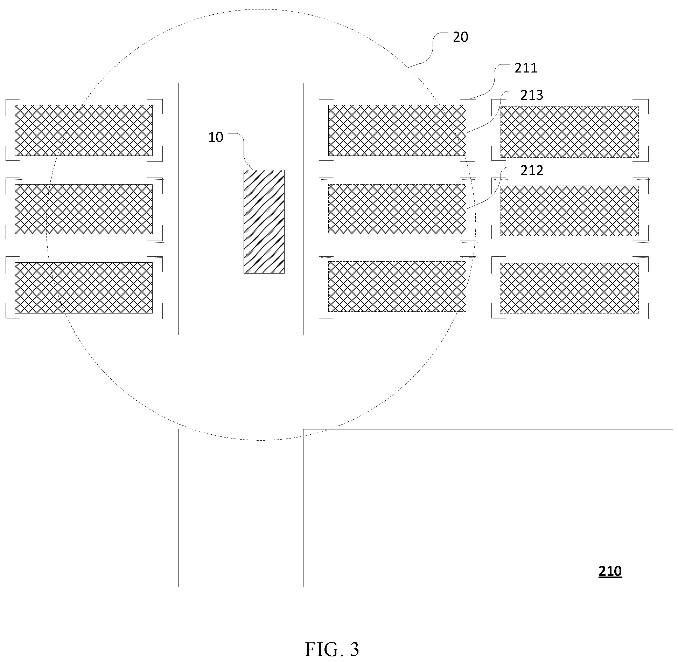

Specifically, in step S130, the plane of the candidate containers that are observable by the vehicle is determined based on relative positions between the vehicle and the candidate containers, and whether the current candidate containers actually exist can be determined by comparing laser clustering and planar fitting result based on the laser data at the current moment with the candidate containers in the first container map. Specifically, if the laser clustering and planar fitting result can be matched with the candidate containers in the first container map, the candidate containers actually exist; if the laser clustering and planar fitting result cannot be matched with the candidate containers in the first container map, the candidate containers do not actually exist. As shown in FIGS. 2-3, after comparison, existing containers 213 are depicted with solid lines. If a candidate container does not exist, the candidate container may be deleted from the first container map, and the size of the candidate container is recorded as 0 in the second container map. In other alternative embodiments, if an existing container not in the first container map is observed based on the laser data, the observed container can be updated to the first container map.

Specifically, the initial size of each candidate container in the second container map is 0. In some embodiments, each bay in the second container map initially has no containers placed, and step S140 is performed to determine the positions and sizes of the candidate containers, thereby accurately updating the second container map. In other embodiments, each bay in the second container map may be pre-filled with containers at the maximum stacking layers, but the size of each container is initially set to 0. Thus, step S140 can be performed to determine the positions and sizes of the candidate containers of which the size need to be updated, thereby accurately updating the second container map. In yet other embodiments, the second container map can assist in storing the sizes of the candidate containers in the first container map. With the initial size of each candidate container in the second container map set to 0, the accurate placement positions and sizes of containers in each bay of the port area can be determined by combining the first container map and the second container map during continuous updates, and can be updated as containers are handled.

Specifically, in step S140, the size information of the candidate containers based on the laser data may be compared with the size information of the candidate containers in the second container map. If the size information of the candidate containers based on the laser data is different from the size information of the candidate containers in the second container map, the size information of the candidate containers based on the laser data is updated to the second container map, thereby updating the size information of each candidate container in the second container map.

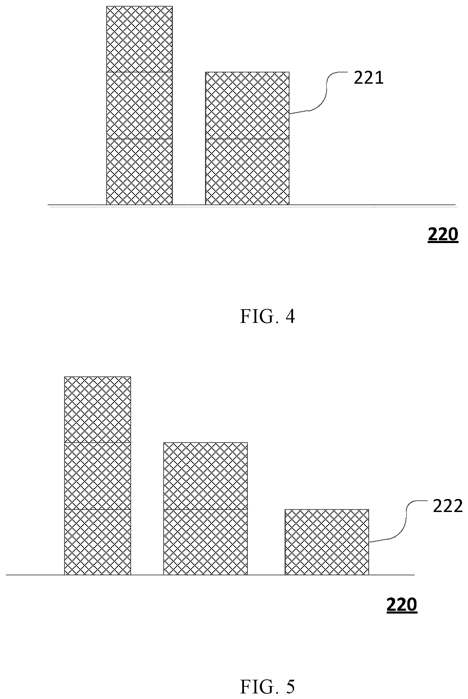

Furthermore, referring to FIGS. 4 and 5, FIG. 4 shows the placement positions of candidate containers in the second container map 220. After comparison, the size of the actually existing candidate container 222 in the second container map 220 is 0. At this time, the size of the actually existing candidate container 222 may be updated to the second container map 220, as shown in FIG. 5.

Specifically, step S140 may further include distributing the size information of the candidate containers based on the laser data to associated vehicle terminals. In some implementations, the associated vehicle terminals are the vehicle terminals travelling in the port area. In other implementations, the first container map and the second container map may be stored on a server, and the associated vehicle terminals are the vehicle terminals registered on the server and subscribed to size update messages of the containers in the second container map. Furthermore, the vehicle terminals may directly interact with the server to obtain the second container map and the updated second container map, or may interact with the server to receive update messages after saving the second container map locally, so as to update the locally stored second container map, this method reduces the amount of data transmission and further reduces the computational load on other vehicles.

Furthermore, updates to the second container map may be simultaneously updated to the first container map, making the originally randomly generated first container map closer to the real container map.

Specifically, step S150 may be performed when the number of to-be-processed candidate containers exceeds a third preset threshold. The third preset threshold may be set as needed, for example, the third preset threshold can be set to an integer between 3 and 10, but the present disclosure is not limited thereto, and other numbers of the third preset threshold also fall within the protection scope of the present disclosure.

The third preset threshold is used to determine whether there are enough containers surrounding the vehicle whose laser point cloud data is sufficient to update the vehicle positioning information. If there are enough candidate containers, the positioning information of vehicle is updated; if the candidate containers are not enough, the contribution of containers to positioning updating is minimal, so subsequent steps can be not performed. This method reduces amount of data processing, improves algorithm efficiency, and minimizes system load. Furthermore, if the number of candidate containers does not exceed the third preset threshold, the positioning information of the vehicle at the next moment is acquired to execute the vehicle positioning method. As the vehicle moves, the positioning information of the vehicle at the next moment has already changed, allowing the method to be executed based on the positioning information of vehicle of the next moment.

Specifically, the second preset threshold is used to determine whether the number of point clouds in the matched laser data is sufficient for updating the positioning information of the vehicle based on containers. The second preset threshold can be configured as needed, such as an integer between 50 and 150, but the present disclosure is not limited thereto, and other numbers of the second preset threshold are also within the protection scope of the disclosure.

Specifically, in step S150, planar matching between the laser data and the candidate containers in the second container map is used to construct a least-squares function, thereby updating the positioning information of the vehicle. The positioning information updated in step S150 is more accurate laser positioning information based on laser data.

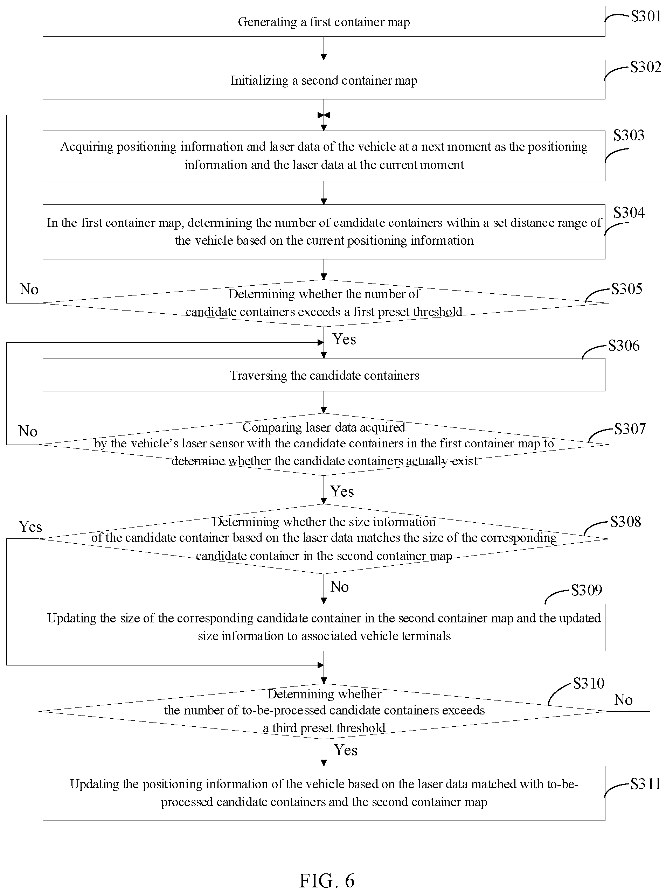

FIG. 6 is a flowchart of the vehicle positioning method according to a specific embodiment of the present disclosure. As shown in FIG. 6, the vehicle positioning method includes the following steps.

S301: generating a first container map.

S302: initializing a second container map.

S303: acquiring positioning information and laser data of the vehicle at a next moment as the positioning information and the laser data at the current moment.

S304: in the first container map, determining the number of candidate containers within a set distance range of the vehicle based on the current positioning information.

S305: determining whether the number of candidate containers exceeds a first preset threshold.

If the judgment in step S305 is negative, return to step S303.

If the judgment in step S305 is positive, perform step S306: traversing the candidate containers (i.e., the candidate containers determined in step S304).

S307: comparing laser data acquired by the vehicle's laser sensor with the candidate containers in the first container map to determine whether the candidate containers actually exist.

If the comparison result in step S307 is negative, repeat step S306.

If the comparison result in step S307 is positive, perform step S308: determining whether the size information of the candidate container based on the laser data matches the size of the corresponding candidate container in the second container map.

If the comparison result in step S308 is negative, perform step S309: updating the size of the corresponding candidate container in the second container map and the updated size information to associated vehicle terminals.

If the comparison result in step S308 is positive, perform step S310: determining whether the number of to-be-processed candidate containers exceeds a third preset threshold.

If the comparison result in step S310 is negative, return to step S303.

If the comparison result in step S310 is positive, perform step S311: updating the positioning information of the vehicle based on the laser data matched with to-be-processed candidate containers and the second container map.

The above are only multiple specific implementations of the vehicle positioning method of the present disclosure. These implementations can be implemented independently or in combination, and the present disclosure is not limited thereto. Further, the flowcharts of the present disclosure are only illustrative, and the execution order of steps is not limited thereto. Splitting, merging, reordering steps, or other synchronous/asynchronous execution methods all fall within the protection scope of the disclosure.

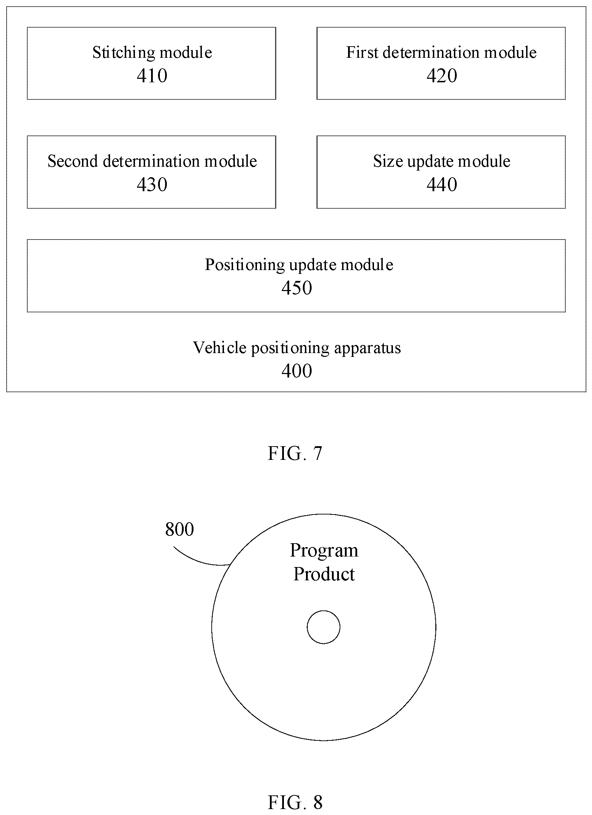

The present disclosure further provides a vehicle positioning apparatus. FIG. 7 illustrates a module diagram of the vehicle positioning apparatus according to an embodiment of the present disclosure. The vehicle positioning apparatus 400 includes a stitching module 410, a first determination module 420, a second determination module 430, a size update module 440, and a positioning update module 450.

The stitching module 410 is configured to acquire the vehicle's positioning information. The first determination module 420 is configured to determine candidate containers within a set distance range of the vehicle in the first container map based on the positioning information. The second determination module 430 is configured to compare laser data acquired by the vehicle's laser sensor with candidate containers in the first container map to determine whether the candidate containers actually exist. The size update module 440 is configured to store size information of the candidate containers based on laser data into the second container map in response to determining that the candidate containers actually exist. The positioning update module 450 is configured to update the positioning information of the vehicle based on laser data matched with to-be-processed candidate containers and the second container map, wherein the to-be-processed candidate containers are actually existing candidate containers whose point cloud count in the matched laser data exceeds a second preset threshold.

In the vehicle positioning apparatus provided by the present disclosure, the preliminary position of the vehicle is determined based on the positioning information of the vehicle. The first container map generated based on different arrangements of candidate containers in determined bays is used to determine whether multiple candidate containers (possible containers) exist around the vehicle. If multiple candidate containers exist, laser data is used to determine whether the candidate containers actually exist. If the candidate containers actually exist, the second container map is updated, and the positioning information of the vehicle is updated based on the second container map and to-be-processed candidate containers with more laser point clouds, thereby achieving precise positioning of the vehicle. The method reduces computing module costs, and avoids cumulative errors from non-closed-loop laser data matching. Meanwhile, the real-time performance, consistency, and robustness requirements for vehicle positioning can be met without generating high-precision maps.

FIG. 7 only schematically illustrates the vehicle positioning apparatus 400 of the present disclosure. Splitting, merging, or adding modules all fall within the protection scope of the disclosure. The vehicle positioning apparatus 400 can be implemented by software, hardware, firmware, plugins, or any combination thereof, and the present disclosure is not limited thereto.

Embodiments of the present disclosure further provide a computer-readable storage medium configured to store a program, and the steps of the vehicle positioning method is implemented when the program is executed by a processor. In some alternative implementations, various aspects of the present disclosure may also be implemented in the form of a program product, which includes program code, wherein when the program product runs on a terminal device, causes the terminal device to perform the steps of the navigation method in a quay crane area according to various exemplary embodiments of the present disclosure described above.

Referring to FIG. 8, a program product 800 for implementing the above method according to an embodiment of the present disclosure is described. The program product 800 may use a portable compact disc read-only memory (CD-ROM) and include program code, which can run on a terminal device such as a personal computer. However, the program product of the present disclosure is not limited thereto. In this document, a readable storage medium may be any tangible medium that contains or stores a program usable by or in conjunction with an instruction execution system, apparatus, or device.

The program product can take the form of any combination of one or more readable media. A readable medium may be a readable signal medium or a readable storage medium. A readable storage medium may include, but is not limited to, an electrical, magnetic, optical, electromagnetic, infrared, or semiconductor system, apparatus, or device, or any combination thereof. More specific examples of readable storage media (a non-exhaustive list) include: electrical connections with one or more wires, portable disks, hard drives, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the above.

A computer-readable storage medium may include a propagated data signal embodied in baseband or as part of a carrier wave, which contains readable program code. Such a propagated data signal may take various forms, including but not limited to electromagnetic signals, optical signals, or any suitable combination of the above. A readable medium may also be any readable medium other than a readable storage medium, which can transmit, propagate, or carry the program for use by or in connection with an instruction execution system, apparatus, or device. The program code contained on a readable storage medium can be transmitted using any suitable medium, including but not limited to wireless, wired, optical fiber, RF, and so on, or any suitable combination of the above.

The program code for performing operations of the present disclosure can be written in any combination of one or more programming languages, including object-oriented programming languages such as Java, C++, and conventional procedural programming languages such as the "C" language or similar programming languages. The program code may execute entirely on the user's computing device, partly on the user's device, as a standalone software package, partly on the user's computing device and partly on a remote computing device, or entirely on a remote computing device or server. In the case of remote computing devices, they may be connected to the user's computing device via any type of network, including local area networks (LAN) or wide area networks (WAN), or may be connected to external computing devices (e.g., through an Internet service provider to connect over the Internet).

Embodiments of the present disclosure further provide an electronic device, including a processor and a memory storing executable instructions for the processor. The processor is configured to execute the steps of the vehicle positioning method according to any embodiment described above by executing the executable instructions.

Those skilled in the art can understand that various aspects of the present disclosure can be implemented as systems, methods, or program products. Therefore, various aspects of the present disclosure can be embodied in the following forms: entirely hardware implementations, entirely software implementations (including firmware, microcode, etc.), or hybrid hardware-software implementations, collectively referred to herein as "circuits," "modules," or "platforms."

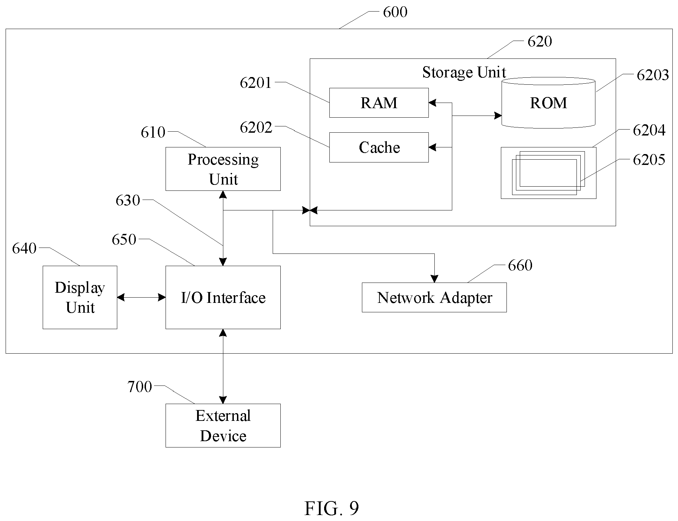

The electronic device 600 according to this embodiment of the present disclosure is described below with reference to FIG. 9. The electronic device 600 shown in FIG. 9 is only an example and should not impose any limitations on the functionality or scope of use of the embodiments of the present disclosure.

As shown in FIG. 9, the electronic device 600 is embodied as a general-purpose computing device. The components of the electronic device 600 may include, but are not limited to: at least one processing unit 610, at least one storage unit 620, a bus 630 connecting different platform components (including the storage unit 620 and the processing unit 610), a display unit 640, and others.

The storage unit is configured to store program code that can be executed by the processing unit 610, enabling the processing unit 610 to perform the steps of the vehicle positioning method described above according to various exemplary embodiments of the present disclosure. For example, the processing unit 610 may execute the steps shown in FIG. 1.

The storage unit 620 may include a readable medium in the form of a volatile storage unit, such as a random access memory (RAM) 6201 and/or a cache storage unit 6202, and may further include a read-only memory (ROM) 6203.

The storage unit 620 may further include a program/utility tool 6204 with a set of (at least one) program modules 6205, the program modules 6205 may include, but are not limited to, an operating system, one or more application programs, other program modules, and program data. Each of these examples or some combination thereof may include implementations of network environments.

The bus 630 may represent one or more of several types of bus structures, including a storage unit bus or storage unit controller, a peripheral bus, a graphics acceleration port, a processing unit, or a local bus using any of a variety of bus architectures.

The electronic device 600 may further communicate with one or more external devices 700 (such as a keyboard, a pointing device, a Bluetooth device, etc.), with one or more devices that enable user interaction with the electronic device 600, and/or with any devices (such as a router, a modem, etc.) that enable the electronic device 600 to communicate with one or more other computing devices. Such communication may be realized via an input/output (I/O) interface 650. Furthermore, the electronic device 600 may communicate with one or more networks (such as a local area network (LAN), wide area network (WAN), and/or a public network like the Internet) via a network adapter 660. The network adapter 660 may communicate with other modules of the electronic device 600 via the bus 630. It should be understood that although not shown in the figures, other hardware and/or software modules may be used in conjunction with the electronic device 600, including but not limited to microcode, device drivers, redundant processing units, external disk drive arrays, RAID systems, tape drives, and data backup storage platforms, and so on.

Through the description of the above embodiments, those skilled in the art can easily understand that the example embodiments described herein can be implemented by software or by a combination of software and necessary hardware. Therefore, the technical solution according to the embodiments of the present disclosure can be embodied in the form of a software product, which can be stored in a non-volatile storage medium (such as a CD-ROM, USB flash drive, mobile hard disk, etc.) or on a network, and includes several instructions to make a computing device (such as a personal computer, server, or network device, etc.) execute the above-mentioned vehicle positioning method according to the embodiments of the present disclosure.

Compared with the prior art, the present disclosure has the following technical effects.

The preliminary position of the vehicle is determined based on the positioning information of the vehicle. Then, the first container map generated based on different arrangements of candidate containers in the determined bay is used to determine whether multiple candidate containers (possible containers) exist around the vehicle. If multiple candidate containers exist, laser data is used to determine whether the candidate containers actually exist. If the candidate containers do exist, the second container map is updated. The vehicle's positioning information is then updated based on the second container map and the candidate containers with dense laser point clouds to obtain precise vehicle positioning. This method reduces the cost of the computing module and avoids cumulative errors caused by non-closed-loop matching of laser data. Meanwhile, the real-time performance, consistency, and robustness requirements for vehicle positioning can be met without generating high-precision maps.

The above contents are detailed descriptions of the present disclosure in combination with specific selective embodiments. However, the specific implementation methods of the present disclosure are not limited to these descriptions. For those skilled in the field of the present disclosure, several simple deductions or substitutions without departing from the concept of the present disclosure can be made and should all be regarded as falling into the protection scope of the present disclosure.

## Claims

1. A vehicle positioning method, **characterized in that** the method includes:
acquiring positioning information of a vehicle;
in a first container map, determining candidate containers within a preset distance range of the vehicle based on the positioning information;
comparing laser data acquired by the vehicle's laser sensor with the candidate containers in the first container map to determine whether the candidate containers actually exist;
in response to determining that the candidate containers actually exist, storing size information of the candidate containers based on the laser data into a second container map;
updating the positioning information of the vehicle based on the laser data matched with to-be-processed candidate containers and the second container map, wherein the to-be-processed candidate containers are actually existing candidate containers of which the number of point clouds from matched laser data is greater than a second preset threshold.

2. The vehicle positioning method according to claim 1, wherein the first container map is a container map including different arrangements of candidate containers generated based on determined bays, and an initial size of each candidate container in the second container map is 0.

3. The vehicle positioning method according to claim 1, wherein the step of storing size information of the candidate containers based on the laser data into a second container map includes:
comparing the size information of the candidate containers based on the laser data with the size information of the candidate containers in the second container map;
when the size information of candidate containers based on the laser data is different from the size information of candidate containers in the second container map, updating the size information of the candidate containers based on the laser data into the second container map.

4. The vehicle positioning method according to claim 3, wherein the step of updating the size information of the candidate containers based on the laser data into the second container map includes:
distributing the size information of the candidate containers based on the laser data to associated vehicle terminals.

5. The vehicle positioning method according to claim 1, wherein the size of the candidate containers in the second container map is recorded as 0 when the candidate containers do not actually exist.

6. The vehicle positioning method according to claim 1, wherein the step of comparing laser data acquired by the vehicle's laser sensor with the candidate containers in the first container map to determine whether the candidate containers actually exist is performed when the number of the candidate containers exceeds a first preset threshold.

7. The vehicle positioning method according to claim 6, wherein:
when the number of candidate containers does not exceed the first preset threshold, acquiring positioning information of the vehicle at a next moment to execute the vehicle positioning method.

8. The vehicle positioning method according to claim 1, wherein the step of updating the positioning information of the vehicle based on the laser data matched with to-be-processed candidate containers and the second container map is performed when the number of the to-be-processed candidate containers exceeds a third preset threshold.

9. The vehicle positioning method according to claim 8, wherein:
when the number of the to-be-processed candidate containers does not exceed the third preset threshold, acquiring positioning information of the vehicle at a next moment to execute the vehicle positioning method.

10. A vehicle positioning apparatus applied to the vehicle positioning method according to any one of claims 1 to 9, **characterized in that** the apparatus includes:
a stitching module configured to acquire positioning information of a vehicle;
a first determination module configured to determine candidate containers within a preset distance range of the vehicle in the first container map based on the positioning information;
a second determination module configured to compare laser data acquired by the vehicle's laser sensor with the candidate containers in the first container map to determine whether the candidate containers actually exist;
a size update module configured to store size information of the candidate containers based on the laser data into the second container map in response to determining that the candidate containers actually exist;
a positioning update module configured to update the positioning information of the vehicle based on the laser data matched with to-be-processed candidate containers and the second container map, wherein the to-be-processed candidate containers are actually existing candidate containers of which the number of point clouds in matched laser data is greater than a second preset threshold.

11. An electronic device, including:
a processor;
a memory configured to store a computer program, wherein the vehicle positioning method according to any one of claims 1 to 9 is performed when the computer program is executed by the processor.

12. A computer storage medium configured to store a computer program, wherein the vehicle positioning method according to any one of claims 1 to 9 is performed when the computer program is executed by a processor.
